# EUROPEAN PATENT APPLICATION

(11) **EP 4 455 861 A1**
(43) Date of publication of application: **30.10.2024**
(21) Application number: 23746079.5
(22) Date of filing: 16.01.2023
(51) Int. Cl.: G06F 8/34, G06F 9/445

(54) **METHOD AND APPARATUS FOR GENERATING COMBINED GRAPHICAL CONTROL, AND DEVICE AND STORAGE MEDIUM**

(30) Priority: 28.01.2022 CN 202210116159
(71) Applicant: Beijing Zitiao Network Technology Co., Ltd., Beijing 100190 (CN)
(72) Inventor: XU, Yuan, Beijing 100086 (CN); MA, Ruifeng, Beijing 100086 (CN); HUANG, Xiaobo, Beijing 100086 (CN); HUANG, Weifeng, Beijing 100086 (CN)
(74) Representative: Dentons UK and Middle East LLP
(86) International application number: PCT/CN2023/072408
(87) International publication number: WO 2023/143197

(57) **Abstract**

Provided are a method and apparatus for generating a combined graphical control, a device and a storage medium. The method includes combining at least two basic functionality controls in a graphical interface into the combined graphical control according to a combining operation triggered by a user; according to a template generation operation triggered by the user, popping up a configuration window corresponding to the combined graphical control to generate a resource file corresponding to the combined graphical control; receiving configuration information inputted by the user in the configuration window; generating a configuration file corresponding to the combined graphical control according to the configuration information; and storing the configuration file and the resource file in a set control library.

## Description

This application claims priority to Chinese Patent Application No. 202210116159.4 filed with the China National Intellectual Property Administration (CNIPA) on Jan. 28, 2022, the disclosure of which is incorporated herein by reference in its entirety.

### TECHNICAL FIELD

Embodiments of the present disclosure relate to the field of computer technologies and, for example, to a method and apparatus for generating a combined graphical control, a device and a storage medium.

### BACKGROUND

In a process of graphical programming (referred to as Graph), some built-in functionality controls need to be combined to achieve a desired function of a user. These built-in functionality controls have a single or basic control capability or computing capability and can be referred to as atomic controls. In the related art, the user needs to recombine the atomic controls every time, affecting the editing efficiency of the graphical programming.

### SUMMARY

Embodiments of the present disclosure provide a method and apparatus for generating a combined graphical control, a device and a storage medium, so as to improve the editing efficiency of graphical programming.

In a first aspect, an embodiment of the present disclosure provides a method for generating a combined graphical control. The method includes the steps described below.

At least two basic functionality controls in a graphical interface are combined into the combined graphical control according to a combining operation triggered by a user.

According to a template generation operation triggered by the user, a configuration window corresponding to the combined graphical control is popped up and a resource file corresponding to the combined graphical control is generated.

Configuration information inputted by the user is received in the configuration window.

A configuration file corresponding to the combined graphical control is generated according to the configuration information.

The configuration file and the resource file are stored in a set control library.

In a second aspect, an embodiment of the present disclosure provides an apparatus for generating a combined graphical control. The apparatus includes a combined graphical control generation module, a resource file generation module, a configuration information input module, a configuration file generation module, and a file storage module.

The combined graphical control generation module is configured to combine at least two basic functionality controls in a graphical interface into the combined graphical control according to a combining operation triggered by a user.

The resource file generation module is configured to, according to a template generation operation triggered by the user, pop up a configuration window corresponding to the combined graphical control and generate a resource file corresponding to the combined graphical control.

The configuration information input module is configured to receive configuration information inputted by the user in the configuration window.

The configuration file generation module is configured to generate a configuration file corresponding to the combined graphical control according to the configuration information.

The file storage module is configured to store the configuration file and the resource file in a set control library.

In a third aspect, an embodiment of the present disclosure further provides an electronic device. The electronic device includes one or more processing apparatuses and a storage apparatus configured to store one or more programs.

When the one or more programs are executed by the one or more processing apparatuses, the one or more processing apparatuses perform the method for generating a combined graphical control according to the embodiments of the present disclosure.

In a fourth aspect, an embodiment of the present disclosure further provides a computer-readable medium storing a computer program. When the program is executed by a processing apparatus, the method for generating a combined graphical control according to the embodiments of the present disclosure is performed.

### BRIEF DESCRIPTION OF DRAWINGS

FIG. 1 is a flowchart of a method for generating a combined graphical control according to an embodiment of the present disclosure;
FIG. 2A is a schematic diagram of a combined subgraph according to an embodiment of the present disclosure;
FIG. 2B is a schematic diagram of a combined main graph according to an embodiment of the present disclosure;
FIG. 3 is a schematic diagram of generating a configuration file according to an embodiment of the present disclosure;
FIG. 4 is a structural diagram of an apparatus for generating a combined graphical control according to an embodiment of the present disclosure; and
FIG. 5 is a structural diagram of an electronic device according to an embodiment of the present disclosure.

### DETAILED DESCRIPTION

It is to be understood that multiple steps recited in the method embodiments of the present disclosure may be performed in a different order, and/or in parallel. In addition, the method embodiments may include additional steps and/or omit execution of illustrated steps. The scope of the present disclosure is not limited in this respect.

As used herein, the term "include" and variations thereof are intended to be inclusive, that is, "including, but not limited to". The term "according to" is "at least partially according to". The term "one embodiment" means "at least one embodiment"; the term "another embodiment" means "at least one another embodiment"; and the term "some embodiments" means "at least some embodiments". Related definitions of other terms are given hereinafter.

It is to be noted that references to "first", "second" and the like in the present disclosure are merely intended to distinguish one from another apparatus, module, or unit and are not intended to limit the order or interrelationship of the functions performed by the apparatus, module, or unit.

It is to be noted that references to modifications of "one" or "a plurality" mentioned in the present disclosure are intended to be illustrative and not limiting; those skilled in the art should understand that "one" or "a plurality" should be understood as "one or more" unless clearly expressed in the context.

Names of messages or information exchanged between multiple apparatuses in embodiments of the present disclosure are used for an illustrative purpose and are not to limit the scope of such messages or information.

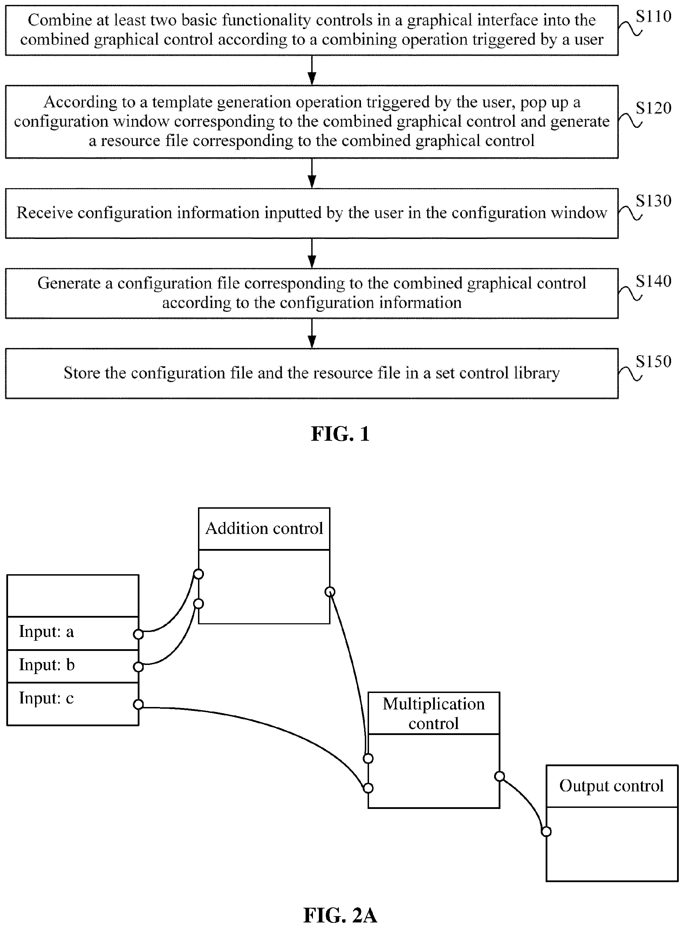

FIG. 1 is a flowchart of a method for generating a combined graphical control according to an embodiment of the present disclosure. This embodiment is applicable to a case where at least two basic functionality controls are combined into a reusable combined graphical control. This method may be performed by an apparatus for generating a combined graphical control. This apparatus may be composed of hardware and/or software and generally be integrated in a device with a function of generating the combined graphical control. The device may be an electronic device such as a server, a mobile terminal, or a cluster of servers. As shown in FIG. 1, this method includes the steps described below.

In S110, at least two basic functionality controls in a graphical interface are combined into the combined graphical control according to a combining operation triggered by a user.

A basic functionality control in the graphical interface may be created to achieve a certain logic function and may also be referred to as an atomic control, which is a control with a single and basic function in the graphical interface and constitutes a minimum unit in a logical diagram. At least two basic functionality controls have a connection relationship and form a complete functional logic. In this embodiment, the user selects at least two basic functionality controls in the graphical interface and performs the combining operation on the selected at least two basic functionality controls to obtain the combined graphical control composed of the at least two basic functionality controls.

For example, a process of combining the at least two basic functionality controls in the graphical interface into the combined graphical control according to the combining operation triggered by the user may be: selecting the at least two basic functionality controls in the graphical interface according to a selection operation of the user; generating a combined subgraph and a combined main graph according to the combining operation triggered by the user at the at least two selected basic functionality controls; and associating the combined main graph with the combined subgraph to obtain the combined graphical control.

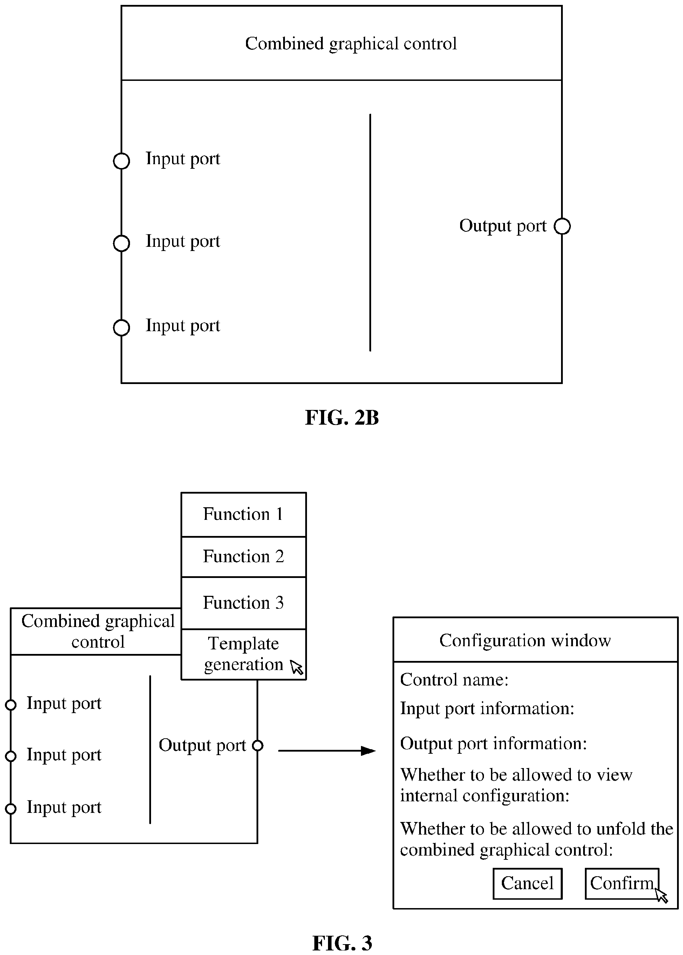

The combined subgraph is used for representing a functional logic of the combined graphical control, and the combined main graph is used for displaying configuration information of the combined graphical control, such as a name, input port information and output port information. In this embodiment, the user first right-clicks the selected at least two basic functionality controls, an "operation selection interface" pops up, and a "combination" option is selected in the "operation selection interface", so as to achieve a combination of the at least two basic functionality controls and obtain the combined graphical control. Exemplarily, as shown in FIG. 2A, assuming that the operation of (a+b)*c is to be implemented in the graphical interface, it is necessary to create an input control, an addition control, a multiplication control and an output control in the graphical interface and connect the multiple controls according to an operation logic. The user selects and right-clicks the input control, the addition control, the multiplication control and the output control and selects the "combination" option in the pop-up window so as to generate the combined subgraph and the combined main graph, and the combined man graph is associated with the combined subgraph so as to obtain the combined graphical control. FIG. 2A is the combined subgraph and FIG. 2B is the combined main graph.

In S120, according to a template generation operation triggered by the user, a configuration window corresponding to the combined graphical control is popped up and a resource file corresponding to the combined graphical control is generated.

The configuration window is used for providing an edit box for the user to input the configuration information corresponding to the combined graphical control, and the user may input the configuration information in an edit window.

The resource file may include a control connection relationship description file and a control reference resource file, where the control connection relationship description file includes control list information and edge list information. The control list information includes a unique identification code, a control name, a resource identification code, input port information, and output port information, and the edge list information includes an edge name, edge input port information, and edge output port information.

The control list information is composed of the information of the basic functionality controls included in the combined graphical control. The unique identification code represents an identification code of the basic functionality control in the combined subgraph. The resource identification code represents an identification code of the basic functionality control in the set control library. The control name is a name of the basic functionality control stored in the set library. The input port information includes an input port name, an input port unique identification code, an input port type, an input port serial number, an input port position and information about whether the input port is linked. The output port information includes an output port name, an output port unique identification code, an output port type, an output port serial number, an output port position and information about whether the output port is linked.

The edge list information is formed by information of edges connecting multiple basic functionality controls. The edge input port information includes an edge input port identification code, edge input port identity information, control information to which the edge input port belongs, and an edge input port type. The edge output port information includes an edge output port identification code, edge output port identity information, control information to which the edge output port belongs, and an edge output port type.

For example, a process of generating the resource file corresponding to the combined graphical control may be: analyzing the basic functionality controls and a connection relationship included in the combined graphical control to obtain information of the basic functionality controls and edge information connecting the basic functionality controls; where the information of the basic functionality controls constitutes the control list information, and the edge information constitutes the edge list information.

Both the control list information and the edge list information may be expressed in a set format (for example, a json format). In this embodiment, the information of the basic functionality controls and the edge information connecting the basic functionality controls are obtained, and the information of the basic functionality controls and the edge information connecting the basic functionality controls are written in the json format so that the control list information and the edge list information are obtained.

The control reference resource file includes a storage path of a control reference resource. The control reference resource file may be audio, a picture, a document and the like and may be a reference resource file in mp3, png, jpg, fbx, shader and other formats. The control reference resource file may be loaded into the basic functionality control so that the basic functionality control processes the control reference resource file according to its own logic function.

In S 130, configuration information inputted by the user is received in the configuration window.

The configuration information may include a name of the combined graphical control, input port information of the combined graphical control, output port information of the combined graphical control, whether to be allowed to view internal configuration, whether to be allowed to unfold the combined graphical control and other information. The configuration information is used for rendering the combined main graph corresponding to the combined graphical control.

In S140, a configuration file corresponding to the combined graphical control is generated according to the configuration information.

The configuration file may be expressed in a set format (such as a json format). For example, after the configuration information inputted by the user is acquired, the configuration information is edited into the configuration file in the json format. Exemplarily, FIG. 3 is a schematic diagram of generating a configuration file according to this embodiment. As shown in FIG. 3, the user right-clicks the combined main graph, a "function selection" window pops up, the user selects a "template generation operation" in the "function selection" window, a "configuration window" pops up, the configuration information inputted by the user is received in the "configuration window", and the configuration file is generated after the user clicks a "confirmation" button.

In S 150, the configuration file and the resource file are stored in a set control library.

For example, after the configuration file and the resource file are stored in the set control library, the user can reuse the combined graphical control.

For example, the method for generating a combined graphical control according to this embodiment further includes the following steps: in the case where it is detected that the user triggers an operation of creating the combined graphical control, acquiring the configuration file and the resource file corresponding to the combined graphical control; generating the combined subgraph according to the resource file; generating the combined main graph according to the configuration file; and associating the combined subgraph with the combined main graph to generate the combined graphical control.

The combined subgraph is a logical diagram of the basic functionality controls and the connection relationship of the basic functionality controls included in the combined graphical control. The combined main graph displays the configuration information such as the name, an input port and an output port of the combined graphical control.

For example, a process of generating the combined subgraph according to the resource file may be: creating the at least two basic functionality controls included in the combined graphical control according to the control list information; and connecting the created at least two basic functionality controls according to the edge list information and loading the control reference resource file into the corresponding basic functionality controls to obtain the combined subgraph.

In this embodiment, a process of creating the at least two basic functionality controls included in the combined graphical control according to the control list information may be: acquiring the basic functionality controls from the set control library according to the resource identification code; setting a new control unique identification code for the acquired basic functionality controls and establishing a correspondence between the new control unique identification code and the stored control unique identification code; and creating the acquired basic functionality controls in the current graphical interface according to the correspondence.

A process of loading the control reference resource file into the corresponding basic functionality controls may be: acquiring the control reference resource from the storage path of the control reference resource, importing the control reference resource into a resource system of an editor, and finally loading the control reference resource file from the resource system to the corresponding basic functionality controls.

For example, after the correspondence between the new control unique identification code and the stored control unique identification code is established, the remaining control information is acquired according to the correspondence, the basic functionality controls are created in the current graphical interface according to the control information, the edge input port information and the edge output port information at each edge in the edge list information are acquired, the basic functionality controls are connected according to the edge input port information and the edge output port information, and the control reference resource file is loaded into the corresponding basic functionality controls, so as to obtain the combined subgraph.

In this embodiment, a process of generating the combined main graph according to the configuration file may be: rendering the graph according to the name of the combined graphical control, the input port information of the combined graphical control, the output port information of the combined graphical control, whether to be allowed to view internal configuration, whether to be allowed to unfold the combined graphical control and other information in the configuration file, so as to obtain the combined main graph.

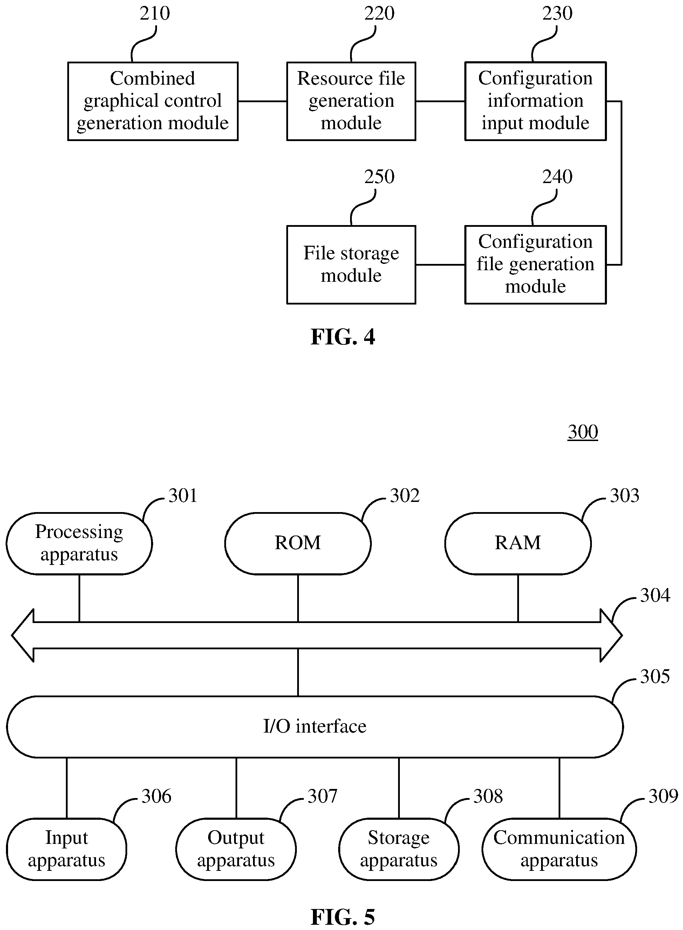

FIG. 4 is a structural diagram of an apparatus for generating a combined graphical control according to an embodiment of the present disclosure. As shown in FIG. 4, this apparatus includes a combined graphical control generation module 210, a resource file generation module 220, a configuration information input module 230, a configuration file generation module 240, and a file storage module 250.

The combined graphical control generation module 210 is configured to combine at least two basic functionality controls in a graphical interface into the combined graphical control according to a combining operation triggered by a user.

The resource file generation module 220 is configured to, according to a template generation operation triggered by the user, pop up a configuration window corresponding to the combined graphical control and generate a resource file corresponding to the combined graphical control.

The configuration information input module 230 is configured to receive configuration information inputted by the user in the configuration window.

The configuration file generation module 240 is configured to generate a configuration file corresponding to the combined graphical control according to the configuration information.

The file storage module 250 is configured to store the configuration file and the resource file in a set control library.

For example, the combined graphical control generation module 210 is configured to, in the manners described below, combine at least two basic functionality controls in the graphical interface into the combined graphical control according to a combining operation triggered by the user.

The at least two basic functionality controls are selected in the graphical interface according to a selection operation of the user.

A combined subgraph and a combined main graph are generated according to the combining operation triggered by the user at the at least two selected basic functionality controls.

The combined main graph is associated with the combined subgraph so as to obtain the combined graphical control.

For example, the resource file includes a control connection relationship description file and a control reference resource file; where the control connection relationship description file includes control list information and edge list information, where the control list information includes a control unique identification code, a control name, a resource identification code, input port information, and output port information, and the edge list information includes an edge name, an edge unique identification code, edge input port information, and edge output port information; and the control reference resource file includes a storage path of a control reference resource.

For example, the resource file generation module 220 is configured to, in the manners described below, generate the resource file corresponding to the combined graphical control.

The basic functionality controls and a connection relationship included in the combined graphical control are analyzed so as to obtain information of the basic functionality controls and edge information connecting the basic functionality controls.

The information of the at least two basic functionality controls constitutes the control list information, and the edge information constitutes the edge list information.

For example, the apparatus for generating a combined graphical control further includes a combined graphical control creation module configured to perform the steps described below.

In the case where it is detected that the user triggers an operation of creating the combined graphical control, the configuration file and the resource file corresponding to the combined graphical control are acquired.

The combined subgraph is generated according to the resource file.

The combined main graph is generated according to the configuration file.

The combined subgraph is associated with the combined main graph so as to generate the combined graphical control.

For example, the combined graphical control creation module is configured to, in the manners described below, generate the combined subgraph according to the resource file.

The at least two basic functionality controls included in the combined graphical control are created according to the control list information.

The created at least two basic functionality controls are connected according to the edge list information and the control reference resource file is loaded into the corresponding basic functionality controls so as to obtain the combined subgraph.

For example, the combined graphical control creation module is configured to, in the manners described below, create the at least two basic functionality controls included in the combined graphical control according to the control list information.

The basic functionality controls are acquired from the set control library according to the resource identification code.

A new control unique identification code is set for the acquired basic functionality controls and a correspondence between the new control unique identification code and the stored control unique identification code is established.

The acquired basic functionality controls are created in the current graphical interface according to the correspondence.

The preceding apparatus can perform the method provided by all the embodiments of the present disclosure and has functional modules and beneficial effects corresponding to the performed method. For technical details that not described in detail in this embodiment, reference may be made to the method provided by all the embodiments of the present disclosure.

Referring to FIG. 5, FIG. 5 shows a structural diagram of an electronic device 300 suitable for implementing the embodiments of the present disclosure. The electronic device in the embodiments of the present disclosure may include, but is not limited to, mobile terminals such as a mobile phone, a laptop, a digital broadcast receiver, a personal digital assistant (PDA), a PAD, a portable media player (PMP), and an in-vehicle terminal (such as an in-vehicle navigation terminal) and stationary terminals such as a digital television (TV) and a desktop computer, or multiple forms of servers such as an independent server or a cluster of servers. The electronic device shown in FIG. 5 is merely an example and is not intended to limit the function and usage scope of the embodiments of the present disclosure.

As shown in FIG. 5, the electronic device 300 may include a processing apparatus 301 (such as a central processing unit and a graphics processing unit). The processing apparatus 301 may execute multiple types of appropriate operations and processing according to a program stored in a read-only memory (ROM) 302 or a program loaded from a storage apparatus 308 to a random-access memory (RAM) 303. Various programs and data required for the operation of the electronic device 300 are also stored in the RAM 303. The processing apparatus 301, the ROM 302 and the RAM 303 are connected to each other through a bus 304. An input/output (I/O) interface 305 is also connected to the bus 304.

Generally, the following apparatuses may be connected to the I/O interface 305: an input apparatus 306 such as a touch screen, a touch pad, a keyboard, a mouse, a camera, a microphone, an accelerometer, and a gyroscope; an output apparatus 307 such as a liquid crystal display (LCD), a speaker, and a vibrator; the storage apparatus 308 such as a magnetic tape and a hard disk; and a communication apparatus 309. The communication apparatus 309 may allow the electronic device 300 to perform wireless or wired communication with other devices so as to exchange data. Although FIG. 5 illustrates the electronic device 300 having multiple apparatuses, it is to be understood that not all of the apparatuses illustrated herein need to be implemented or present. Alternatively, more or fewer apparatuses may be implemented or present.

According to the embodiments of the present disclosure, the process described above with reference to a flowchart may be implemented as a computer software program. For example, the embodiments of the present disclosure include a computer program product. The computer program product includes a computer program carried in a computer-readable medium. The computer program includes program codes for performing a word recommendation method. In such an embodiment, the computer program may be downloaded from a network and installed through the communication apparatus 309, or may be installed from the storage apparatus 308, or may be installed from the ROM 302. When the computer program is executed by the processing apparatus 301, the preceding functions defined in the methods of the embodiments of the present disclosure are executed.

It is to be noted that the preceding computer-readable medium in the present disclosure may be a computer-readable signal medium or a computer-readable storage medium or any combination thereof. The computer-readable storage medium may be, but is not limited to, for example, an electronic, magnetic, optical, electromagnetic, infrared or semiconductor system, apparatus or device, or any combination thereof. More specific examples of the computer-readable storage medium may include, but are not limited to, an electrical connection with one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical storage device, a magnetic storage device, or any appropriate combination thereof. In the present disclosure, the computer-readable storage medium may be any tangible medium including or storing a program. The program may be used by an instruction execution system, apparatus, or device or used in conjunction with an instruction execution system, apparatus, or device. In the present disclosure, the computer-readable signal medium may include a data signal propagated on a baseband or as a part of a carrier, and computer-readable program codes are carried in the data signal. The data signal propagated in this manner may be in multiple forms, including, but not limited to, an electromagnetic signal, an optical signal, or any suitable combination thereof. The computer-readable signal medium may also be any computer-readable medium except the computer-readable storage medium. The computer-readable signal medium may send, propagate, or transmit a program used by an instruction execution system, apparatus, or device or used in conjunction with an instruction execution system, apparatus, or device. The program codes included on the computer-readable medium may be transmitted via any appropriate medium which includes, but is not limited to, a wire, an optical cable, a radio frequency (RF), or any appropriate combination thereof. The computer-readable storage medium may be a non-transitory computer-readable storage medium.

In some embodiments, clients and servers may communicate using any network protocol currently known or to be developed in the future, such as HyperText Transfer Protocol (HTTP), and may be interconnected with any form or medium of digital data communication (such as a communication network). Examples of the communication network include a local area network (LAN), a wide area network (WAN), an internet (such as the Internet), and a peer-to-peer network (such as an Ad-Hoc network), as well as any network currently known or to be developed in the future.

The preceding computer-readable medium may be included in the preceding electronic device or may exist alone without being assembled into the electronic device.

The preceding computer-readable medium carries one or more programs, where the one or more programs, when executed by the electronic device, cause the electronic device to: combine at least two basic functionality controls in a graphical interface into the combined graphical control according to a combining operation triggered by a user; according to a template generation operation triggered by the user, pop up a configuration window corresponding to the combined graphical control and generate a resource file corresponding to the combined graphical control; receive configuration information inputted by the user in the configuration window; generate a configuration file corresponding to the combined graphical control according to the configuration information; and store the configuration file and the resource file in a set control library.

Computer program codes for performing the operations in the present disclosure may be written in one or more programming languages or combination thereof. The preceding one or more programming languages include, but are not limited to, object-oriented programming languages such as Java, Smalltalk and C++, as well as conventional procedural programming languages such as C or similar programming languages. Program codes may be executed entirely on a user computer, executed partly on a user computer, executed as a stand-alone software package, executed partly on a user computer and partly on a remote computer, or executed entirely on a remote computer or a server. In the case related to the remote computer, the remote computer may be connected to the user computer via any kind of network including a local area network (LAN) or a wide area network (WAN), or may be connected to an external computer (for example, via the Internet through an Internet service provider).

Flowcharts and block diagrams among the drawings illustrate architectures, functions, and operations possible to implement in accordance with the system, method, and computer program product in multiple embodiments of the present disclosure. In this regard, each block in the flowcharts or block diagrams may represent a module, a program segment, or part of codes that contains one or more executable instructions for implementing specified logical functions. It is to be noted that in some alternative implementations, functions marked in blocks may occur in an order different from that marked in the drawings. For example, two successive blocks may, in fact, be executed substantially in parallel or in reverse order, which depends on the functions involved. It is also to be noted that each block in the block diagrams and/or flowcharts and a combination of blocks in the block diagrams and/or flowcharts may be implemented by a special-purpose hardware-based system which executes specified functions or operations, or a combination of special-purpose hardware and computer instructions.

The involved units described in the embodiments of the present disclosure may be implemented by software or hardware. The name of a unit is not intended to limit the unit in a certain circumstance.

The functions described above herein may be executed, at least partially, by one or more hardware logic components. For example, without limitations, example types of hardware logic components that may be used include: a field-programmable gate array (FPGA), an application-specific integrated circuit (ASIC), an application-specific standard product (ASSP), a system on a chip (SOC), a complex programmable logic device (CPLD) and the like.

In the context of the present disclosure, a machine-readable medium may be a tangible medium that may include or store a program used by an instruction execution system, apparatus, or device or used in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device or any suitable combination thereof. More specific examples of the machine-readable storage medium may include an electrical connection according to one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical storage device, a magnetic storage device, or any suitable combination thereof.

According to one or more embodiments of the present disclosure, an embodiment of the present disclosure provides a method for generating a combined graphical control. The method includes the steps described below.

At least two basic functionality controls in a graphical interface are combined into the combined graphical control according to a combining operation triggered by a user.

According to a template generation operation triggered by the user, a configuration window corresponding to the combined graphical control is popped up and a resource file corresponding to the combined graphical control is generated.

Configuration information inputted by the user is received in the configuration window.

A configuration file corresponding to the combined graphical control is generated according to the configuration information.

The configuration file and the resource file are stored in a set control library.

For example, the step of combining the at least two basic functionality controls in the graphical interface into the combined graphical control according to the combining operation triggered by the user includes the steps described below.

The at least two basic functionality controls are selected in the graphical interface according to a selection operation of the user.

A combined subgraph and a combined main graph are generated according to the combining operation triggered by the user at the at least two selected basic functionality controls.

The combined main graph is associated with the combined subgraph so as to obtain the combined graphical control.

For example, the resource file includes a control connection relationship description file and a control reference resource file; where the control connection relationship description file includes control list information and edge list information, where the control list information includes a control unique identification code, a control name, a resource identification code, input port information, and output port information, and the edge list information includes an edge name, an edge unique identification code, edge input port information, and edge output port information; and the control reference resource file includes a storage path of a control reference resource.

For example, the step of generating the resource file corresponding to the combined graphical control includes the step described below.

The at least two basic functionality controls and a connection relationship included in the combined graphical control are analyzed so as to obtain information of the at least two basic functionality controls and edge information connecting the at least two basic functionality controls.

The information of the at least two basic functionality controls constitutes the control list information, and the edge information constitutes the edge list information.

For example, the method for generating a combined graphical control further includes the steps described below.

In the case where it is detected that the user triggers an operation of creating the combined graphical control, the configuration file and the resource file corresponding to the combined graphical control are acquired.

The combined subgraph is generated according to the resource file.

The combined main graph is generated according to the configuration file.

The combined subgraph is associated with the combined main graph so as to generate the combined graphical control.

For example, the step of generating the combined subgraph according to the resource file includes the steps described below.

The at least two basic functionality controls included in the combined graphical control are created according to the control list information.

The created at least two basic functionality controls are connected according to the edge list information and the control reference resource file is loaded into the corresponding at least two basic functionality controls so as to obtain the combined subgraph.

For example, the step of creating the at least two basic functionality controls included in the combined graphical control according to the control list information includes the steps described below.

The at least two basic functionality controls are acquired from the set control library according to the resource identification code.

A new control unique identification code is set for the acquired at least two basic functionality controls and a correspondence between the new control unique identification code and the stored control unique identification code is established.

The acquired at least two basic functionality controls are created in the current graphical interface according to the correspondence.

The embodiments of the present disclosure provide a method and apparatus for generating a combined graphical control, a device and a storage medium. The method includes combining at least two basic functionality controls in a graphical interface into the combined graphical control according to a combining operation triggered by a user; according to a template generation operation triggered by the user, popping up a configuration window corresponding to the combined graphical control and generating a resource file corresponding to the combined graphical control; receiving configuration information inputted by the user in the configuration window; generating a configuration file corresponding to the combined graphical control according to the configuration information; and storing the configuration file and the resource file in a set control library. In the method for generating a combined graphical control, the at least two basic functionality controls are combined into the combined graphical control, and the generated resource file and configuration file are stored in the set control library so that the combined graphical control can be reused, thereby improving the editing efficiency of graphical programming.

## Claims

1. A method for generating a combined graphical control, comprising:
combining at least two basic functionality controls in a graphical interface into the combined graphical control according to a combining operation triggered by a user;
according to a template generation operation triggered by the user, popping up a configuration window corresponding to the combined graphical control to generate a resource file corresponding to the combined graphical control;
receiving configuration information inputted by the user in the configuration window;
generating a configuration file corresponding to the combined graphical control according to the configuration information; and
storing the configuration file and the resource file in a set control library.

2. The method of claim 1, wherein combining the at least two basic functionality controls in the graphical interface into the combined graphical control according to the combining operation triggered by the user comprises:
selecting the at least two basic functionality controls in the graphical interface according to a selection operation of the user;
generating a combined subgraph and a combined main graph according to the combining operation triggered by the user at the at least two selected basic functionality controls; and
associating the combined main graph with the combined subgraph to obtain the combined graphical control.

3. The method of claim 2, wherein the resource file comprises:
a control connection relationship description file which comprises control list information and edge list information, wherein the control list information comprises a control unique identification code, a control name, a resource identification code, input port information, and output port information, and the edge list information comprises an edge name, an edge unique identification code, edge input port information, and edge output port information; and
a control reference resource file which comprises a storage path of a control reference resource.

4. The method of claim 3, wherein generating the resource file corresponding to the combined graphical control comprises:
analyzing the at least two basic functionality controls and a connection relationship comprised in the combined graphical control to obtain information of the at least two basic functionality controls and edge information connecting the at least two basic functionality controls;
wherein the information of the at least two basic functionality controls constitutes the control list information, and the edge information of the at least two basic functionality controls constitutes the edge list information.

5. The method of claim 3, further comprising:
in response to determining that it is detected that the user triggers an operation of creating the combined graphical control, acquiring the configuration file corresponding to the combined graphical control stored in the set control library and the resource file corresponding to the combined graphical control;
generating the combined subgraph according to the resource file;
generating the combined main graph according to the configuration file; and
associating the combined subgraph with the combined main graph to generate the combined graphical control.

6. The method of claim 5, wherein generating the combined subgraph according to the resource file comprises:
creating the at least two basic functionality controls comprised in the combined graphical control according to the control list information; and
connecting the created at least two basic functionality controls according to the edge list information and loading the control reference resource file into the corresponding at least two basic functionality controls to obtain the combined subgraph.

7. The method of claim 6, wherein creating the at least two basic functionality controls comprised in the combined graphical control according to the control list information comprises:
acquiring the at least two basic functionality controls from the set control library according to the resource identification code;
setting a new control unique identification code for the acquired at least two basic functionality controls and establishing a correspondence between the new control unique identification code and the stored control unique identification code; and
creating the acquired at least two basic functionality controls in the current graphical interface according to the correspondence.

8. An apparatus for generating a combined graphical control, comprising:
a combined graphical control generation module configured to combine at least two basic functionality controls in a graphical interface into the combined graphical control according to a combining operation triggered by a user;
a resource file generation module configured to, according to a template generation operation triggered by the user, pop up a configuration window corresponding to the combined graphical control to generate a resource file corresponding to the combined graphical control;
a configuration information input module configured to receive configuration information inputted by the user in the configuration window;
a configuration file generation module configured to generate a configuration file corresponding to the combined graphical control according to the configuration information; and
a file storage module configured to store the configuration file and the resource file in a set control library.

9. The apparatus of claim 8, wherein the combined graphical control generation module is configured to, in manners below, combine the at least two basic functionality controls in the graphical interface into the combined graphical control according to the combining operation triggered by the user, wherein the manners below comprise:
selecting the at least two basic functionality controls in the graphical interface according to a selection operation of the user;
generating a combined subgraph and a combined main graph according to the combining operation triggered by the user at the at least two selected basic functionality controls; and
associating the combined main graph with the combined subgraph to obtain the combined graphical control.

10. The apparatus of claim 9, wherein the resource file comprises:
a control connection relationship description file which comprises control list information and edge list information, wherein the control list information comprises a control unique identification code, a control name, a resource identification code, input port information, and output port information, and the edge list information comprises an edge name, an edge unique identification code, edge input port information, and edge output port information; and
a control reference resource file which comprises a storage path of a control reference resource.

11. The apparatus of claim 10, wherein the resource file generation module is configured to, in a manner below, generate the resource file corresponding to the combined graphical control, wherein the manner below comprises:
analyzing the at least two basic functionality controls and a connection relationship comprised in the combined graphical control to obtain information of the at least two basic functionality controls and edge information connecting the at least two basic functionality controls;
wherein the information of the at least two basic functionality controls constitutes the control list information, and the edge information of the at least two basic functionality controls constitutes the edge list information.

12. The apparatus of claim 10, further comprising a combined graphical control creation module configured to:
in response to determining that it is detected that the user triggers an operation of creating the combined graphical control, acquire the configuration file corresponding to the combined graphical control stored in the set control library and the resource file corresponding to the combined graphical control;
generate the combined subgraph according to the resource file;
generate the combined main graph according to the configuration file; and
associate the combined subgraph with the combined main graph to generate the combined graphical control.

13. The apparatus of claim 12, wherein the combined graphical control creation module is configured to, in manners below, generate the combined subgraph according to the resource file, wherein the manners below comprise:
creating the at least two basic functionality controls comprised in the combined graphical control according to the control list information; and
connecting the created at least two basic functionality controls according to the edge list information and loading the control reference resource file into the corresponding at least two basic functionality controls to obtain the combined subgraph.

14. The apparatus of claim 13, wherein the combined graphical control creation module is configured to, in manners below, create the at least two basic functionality controls comprised in the combined graphical control according to the control list information, wherein the manners below comprise:
acquiring the at least two basic functionality controls from the set control library according to the resource identification code;
setting a new control unique identification code for the acquired at least two basic functionality controls and establishing a correspondence between the new control unique identification code and the stored control unique identification code; and
creating the acquired at least two basic functionality controls in the current graphical interface according to the correspondence.

15. An electronic device, comprising:
one or more processing apparatuses; and
a storage apparatus configured to store one or more programs;
wherein the one or more programs, when executed by the one or more processing apparatuses, cause the one or more processing apparatuses to perform the method for generating the combined graphical control of any one of claims 1 to 7.

16. A computer-readable medium storing a computer program, wherein the computer program, when executed by a processing apparatus, implements the method for generating the combined graphical control of any one of claims 1 to 7.
